# EUROPÄISCHE PATENTSCHRIFT

(11) **EP 2 923 434 B1**
(45) Veröffentlichungstag und Bekanntmachung des Hinweises auf die Patenterteilung: **23.01.2019**
(21) Anmeldenummer: 13776414.8
(22) Anmeldetag: 17.09.2013
(51) Int. Cl.: H02K 3/26, H02K 29/08, H02K 29/12, H02K 41/03

(54) **LINEARMOTOR**
LINEAR MOTOR
MOTEUR LINÉAIRE

(30) Priorität: 21.11.2012 DE 102012022663
(43) Veröffentlichungstag der Anmeldung: 30.09.2015
(73) Patentinhaber: Baumüller Directmotion GmbH, 90482 Nürnberg (DE)
(72) Erfinder: ERLICH, Markus, 6958105 Tel-Aviv (IL)
(74) Vertreter: FDST Patentanwälte
(86) Internationale Anmeldenummer: PCT/EP2013/002792
(87) Internationale Veröffentlichungsnummer: WO 2014/079520

(56) Entgegenhaltungen:
- EP-A2- 2 390 992
- WO-A2-2008/032080
- US-A- 5 225 725
- US-B2- 6 664 664

## Beschreibung

Die Erfindung betrifft einen Linearmotor mit einem Primärteil und mit einem Sekundärteil sowie mit einer primärseitigen Motorwicklung. Ein solcher Linearmotor ist beispielsweise aus der US 5,225,725 bekannt.

Ein derartiger Linearmotor als elektrische Antriebsmaschine bewirkt bei dem bewegten Motorteil inklusive des damit verbundenen Objekts eine geradlinige Bewegung (Translationsbewegung). Eine statorseitige Motor- oder Erregerwicklung ist auf einer ebenen Strecke angeordnet und dem Primärteil (Stator) des Linearmotors zugeordnet. Die stromdurchflossene Motorwicklung des Primärteils erzeugt ein längs einer Fahrstrecke bewegtes Magnetfeld. Dadurch wird das Sekundärteil (Läufer) des Linearmotors entlang dieser Fahrstrecke bewegt und praktisch gezogen. Bei dieser Konstellation ist das bewegte Sekundärteil des Linearmotors üblicherweise mit Dauer- oder Permanentmagneten versehen, so dass die Linearbewegung zwischen den Spulen der Motorwicklung - also dem Primärteil - und den Permanentmagneten - also dem Sekundärteil - auftritt.

Aus der US 6,664,664 B2 ist ein Printed-Circuit-Linearmotor bekannt, dessen ortsfestes Teil (Stator) mit Permanentmagneten versehen ist, während das bewegte Teil (Läufer) in Multi-Layer-Technik aus einer Anzahl von mit Spulenwindungen gedruckten Leiterplatten ausgeführt ist. Diese Ausführung eines Linearmotors ist insbesondere hinsichtlich der Kontaktierung und Bestromung des Läufers sehr aufwendig.

Der Erfindung liegt die Aufgabe zugrunde, einen besonders geeigneten und kostengünstigen Linearmotor zu realisieren.

Diese Aufgabe wird erfindungsgemäß gelöst durch die Merkmale des Anspruchs 1. Vorteilhafte Ausgestaltungen, Weiterbildungen und Varianten sind in den Unteransprüchen angegeben.

Hierzu ist ein beispielsweise als elektrisch oder elektronisch kommutierter Gleichstrommotor arbeitender, Linearmotor mit in Leiterplattentechnik, d. h. in Multilayer-Technik also mehrlagiger Leiterplattentechnik ausgeführten Motorwicklung (Anker- oder Erregerwicklung) vorgesehen. Jede Leiterplatte, welche die Motorwicklung in Form einzelner Spulenwindungen oder -wicklungen trägt bzw. mit diesen als sogenannte printed-circiut-board (PCB) gedruckt ist, ist dem ortsfesten oder unbewegten Primärteil (Stator) des Linearmotors zugeordnet.

Obwohl das bewegte Sekundärteil (Läufer) des Linearmotors grundsätzlich ebenfalls mit Spulenwicklungen, insbesondere in PCB-Multilayer-Technik, ausgeführt sein kann, ist das Sekundärteil erfindungsgemäß vorzugsweise mit Permanentmagneten bestückt. Somit umfasst das Primärteil (Stator) eine im Motorbetrieb stromdurchflossen Ankerwicklung, wobei die das Sekundärteil antreibende Kraft proportional zum Produkt aus Ankerstrom und Erregerfluß ist, der durch die Permanentmagnete des Sekundärteils erzeugt wird. Die Polpaarzahl des Sekundärteils ist dabei vorzugsweise größer als eins (p > 1) und beträgt beispielsweise p = 2, so dass das Sekundärteil mindestens zwei, geeigneterweise mindestens vier, Magnetpole (zwei Nord- und zwei Süd-Pole) aufweist. Die Magnete (Einzelmagnete) sind linear, d. h. in Bewegungsrichtung des Sekundärteils nebeneinander und unter Bildung einer bestimmten Polteilung zueinander beabstandet angeordnet.

Bei der mehrlagigen Leiterplattentechnik des Primärteils mit mehreren hintereinander angeordneten Leiterplatten trägt jede Leiterplatte des Primärteils Ankerwicklungen, die in Bewegungsrichtung des Sekundärteils nebeneinander angeordnet sind. Diese sind mittels Durchkontaktierung mit den Spulenwindungen benachbarter, d. h. dahinter liegender Leiterplatten elektrisch verbunden.

Eine dreiphasige Motorwicklung (Drehfeld- oder Drehstromwicklung) ist hierbei dadurch realisiert, dass jede Leiterplatte für jede Phase eine Anzahl von in Bewegungsrichtung des Sekundärteils bzw. linear nebeneinander angeordneten Spulenwindungen trägt. Diese sind dann phasenweise und zumindest teilweise mittels Durchkontaktierung miteinander elektrisch leitend zu den Spulen der Drehfeldwicklung verbunden.

Zwischen den zwei derartigen Primärteilen mit entsprechenden, mehrlagigen Leiterplattenist das bewegte Sekundärteil unter Spaltbildung angeordnet. Zur Erhöhung des elektromagnetischen Flusses dieses PCB-Doppelstator-Linearmotors weist jedes Primärteil einen vorzugsweise geblechten, d. h. als Blechpaket ausgeführten magnetischen Rückschluss auf. Auf diesem sind die jeweiligen Leiterplatten angeordnet oder befestigt. Durch die Anbindung des Eisenrückschlusses am Primärteil kann zudem eine verbesserte Wärmeabfuhr (Entwärmung) erreicht werden.

Das bewegte Sekundärteil weist einen nicht-magnetischen Träger auf, in welchen die Permanentmagnete aufgenommen sind. Der Träger besteht geeigneterweise aus Aluminium oder aus einem nicht-leitenden Kunststoff.

In besonders vorteilhafter Ausführung ist der Linearmotor mit einem Positionserkennungssystem versehen bzw. weist ein solches auf. Das Positionserkennungssystem arbeitet zweckmäßigerweise magnetisch. Hierzu weist das Positionserkennungssystem einen entsprechenden Sensor sowie eine zweckmäßigerweise kodierte, beispielsweise im sogenannten Gray-Code kodierte, insbesondere inkrementelle, Geberspur auf. Auch kann das Positionserkennungssystem optisch oder induktiv arbeiten, beispielsweise mit einem als Schwingkreis ausgebildeten Positionsgeber (Target) oder Sensor sowie mit einer sinus- und/oder cosinusförmigen Leiterschleife.

Gemäß einer ersten Variante des Linearmotors mit Positionserkennungssystem trägt das bewegte Sekundärteil einen magnetischen Sensor oder Sensorsystem. Die Geberspur ist dann auf dem unbewegten Primärteil und dort vorzugsweise auf einer der Leiterplatten oder einer zusätzlichen Leiterplatte angeordnet. Der Geber kann dabei aus binären oder beispielsweise in Laufrichtung des Sekundärteils zunehmend breiter werdenden Spuren gebildet sein.

Gemäß einer bevorzugten Variante umfasst das Positionserkennungssystem ein Sensor-Array mit einer Anzahl von Hall-Sensoren. Als Geber dienen dann bevorzugt die Permanentmagnete des bewegten Sekundärteils.

Alternativ können die Hall-Sensoren auf dem bewegten Sekundärteil angeordnet sein, während der Geber bzw. die Geberspur dann auf dem stromdurchflossenen Primärteil angeordnet ist. Hierzu sind dort auf einer der Leiterplatten oder auf einer separaten Leiterplatte in bestimmter Anordnung wiederum Spulenwindungen, vorzugsweise in PCB-Technik, angeordnet, die ein elektromagnetisches Feld erzeugen. Diese Spulenwindungen sind geeigneterweise wiederum linear auf dem Primärteil angeordnet. Jedoch können die Spuren des Gebers auch parallel angeordnet sein. Durch eine Verstimmung bzw. Variation der Abstände zwischen den einzelnen Spurenelementen kann ein absolutes Gebersignal (Feedback-Signal) realisiert werden. Grundsätzlich kann der Geber als Absolutwertgeber oder als Inkrementalgeber ausgeführt sein. Beispielsweise weist das Positionserkennungssystem primärteilseitig inkrementelle Geberspuren und sekundärteilseitig ein magnetfeldsensitives Hall-Sensor-Array auf.

Die mit der Erfindung erzielten Vorteile bestehen insbesondere darin, dass durch die Verwendung von mehrlagigen Leiterplatten mit gedruckten Spulenwindungen der Motorwicklung (Anker- oder Erregerwicklung) für das oder jedes Primärteil als Stator eines Linearmotors bereits ein vergleichsweise kostengünstiger Aufbau eines Linearmotors ermöglicht ist. In Verbindung mit einem vorzugsweise magnetischen Positionserkennungssystem (Feedback-System) auf oder an dem Primärteil in Verbindung mit einem Hall-Sensor-Array können die Herstellungskosten für einen solchen Linearmotor weiter erheblich reduziert werden. Zweckmäßig ist hierbei ein Linearmotor in Doppel-Langstator-Bauweise mit zwei als mehrlagige Leiterplatten mit gedruckten Spulenwindungen ausgeführten Primärteilen.

Nachfolgend werden Ausführungsbeispiele der Erfindung anhand einer Zeichnung näher erläutert. Darin zeigen:
- Fig. 1: einen erfindungsgemäßen Linearmotor in PCB-Doppelstator-Bauweise mit zwischen zwei Primärteilen und mit einem bewegten Sekundärteil in Moving-Magnet-Ausführung,
- Fig. 2: den Linearmotor gemäß Fig. 1 in Draufsicht mit primärseitigen Leiterplatten in Multilayer-Bauweise,
- Fig. 3: den Linearmotor in einem Längsschnitt mit Blick auf das mit Permanentmagneten versehene, bewegte Sekundärteil sowie auf die dem Sekundärteil zugewandte Leiterplatte mit gedruckten Spulenwindungen einer Motorwicklung in Linearanordnung,
- Fig. 4: den Linearmotor in einer Stirnansicht,
- Fig. 5: in dreidimensionaler Ansicht eines der Primärteile mit Blick auf die als gedruckte Leiterbahnen ausgeführten Spulenwindungen der als Drehfeldwicklung ausgeführten Motorwicklung und mit einer Anzahl von Hall-Sensoren eines Positionserkennungssystems in Linearanordnung, und
- Fig. 6: in einer Darstellung gemäß Fig. 5 eine Variante des Positionserkennungssystems mit einer als Geberspur ausgeführten Windungen.

Einander entsprechende Teile sind in allen Figuren mit den gleichen Bezugszeichen versehen.

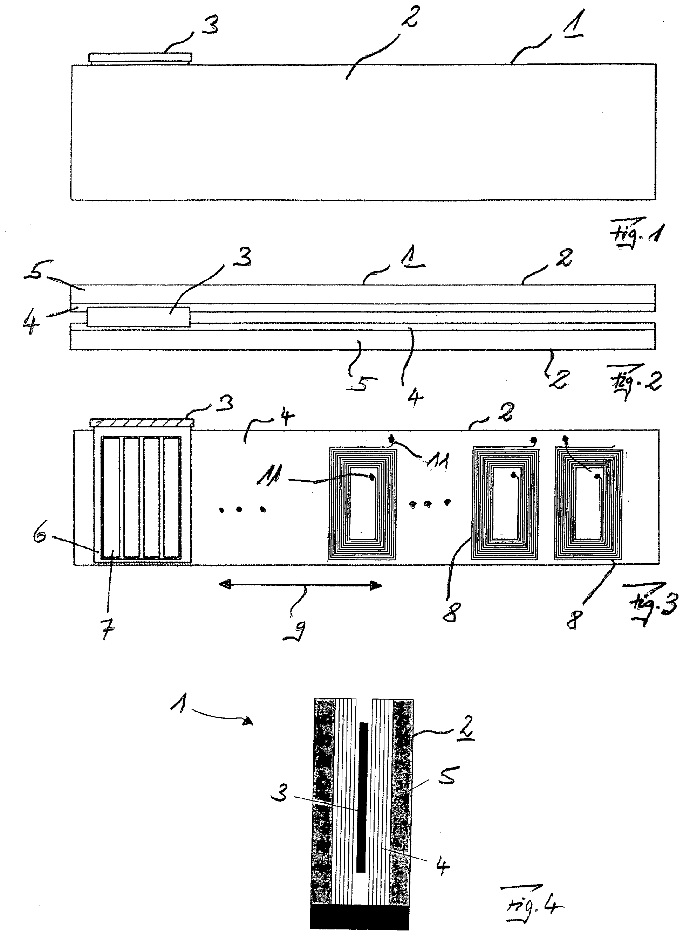

Die Figuren 1 bis 4 zeigen einen Linearmotor 1 mit zwischen zwei unbewegten Primärteilen 2 einem bewegten Sekundärteil 3. Jedes der Primärteile 2 weist eine Leiterplatte 4 in Multilayer-Bauweise und einen magnetischen Rückschluss 5 auf, auf dem die vorzugsweise mehrlagige Leiterplatte 4 angeordnet bzw. befestigt ist. Der magnetische Rückschluss 5 ist beispielsweise geblecht bzw. als Blechpaket ausgeführt.

Das bewegte Sekundärteil 3 umfasst einen Träger oder eine Trägermatrix 6 mit darin einliegenden oder eingebetteten Permanentmagneten 7. Die Polpaarzahl p des im Ausführungsbeispiel dargestellten bewegten Sekundärteils 3 beträgt p = 2, so dass insgesamt vier Einzelmagnete vorgesehen und in den Träger 6 des Sekundärteils 3 eingebunden sind. Die Polpaarzahl kann auch größer sein (p > 2).

Die einzelnen Leiterplatten 4 sind mit gedruckten Spulenwindungen 8, insbesondere in Form von gewundenen Kupferbahnen, versehen. Jeder Leiterplatte 4 weist in der nachfolgend auch als Linearrichtung bezeichneten Bewegungsrichtung 9 des Sekundärteils 3 mehrere solche Spulenwindungen 8 auf. Bei einem dreiphasigen Linearmotor 1 sind je Phase u, v, w der Motor- oder Erregerwicklung vorzugsweise mehrere und insbesondere je Phase u, v, w gleich viele Spulenwindungen 8 in Linearrichtung 9 nebeneinander und zueinander beabstandet angeordnet.

Das jeweilige Primärteils 2 weist mehrlagige Leiterplatten 4 mit mehreren in Querrichtung 10 (Fig. 4) hintereinander angeordneten Leiterplattenschichten nach Art eines Multilayers auf. Die auf die einzelnen Leiterplattenschichten der Leiterplatten 4 gedruckten Spulenwindungen 8 sind mittels Durchkontaktierung 11 miteinander verbunden und bilden dadurch die einzelnen Spulen der bevorzugt dreiphasigen Motorwicklung.

Während bei bestromter Motorwicklung bzw. bestromten Spulenwindungen 8 der Spulen des Primärteils 2 die Magnetachsen (S-N oder N-S) in der in Fig. 4 gezeigten Querrichtung 10 verläuft, verläuft die alternierend polarisierte Magnetachse (S-N, N-S, S-N usw.) des Sekundärteils 3 parallel zur Linear- oder Bewegungsrichtung 9 und somit quer zur Magnetachse des oder jedes Primärteils 2. Beidseitig des Sekundärteils 3 befindet sich zwischen diesem und den Primärteilen 2 jeweils ein Luftspalt 12.

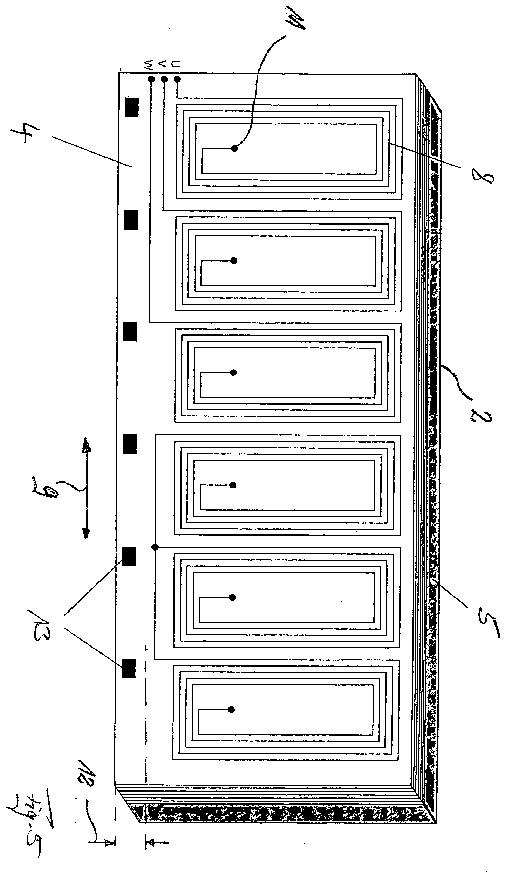

Fig. 5 zeigt in perspektivischer Darstellung eines der Primärteile 2 des Linearmotors 1 mit Blick auf die dem bewegten Sekundärteil (Moving Magnet) 3 zugewandte Leiterplatte 4 in Multilayer-Technik, die mit den als Leiterbahnen ausgeführten Spulenwindungen 8 in Linearanordnung versehen ist bzw. sind. Erkennbar ist auch die dreiphasige Kontaktierung bzw. Leiterbahnverbindung zu den einzelnen Spulenwindungen 8 (linke Figurenhälfte) sowie eine beispielhafte Verbindung oder Verschaltung einzelner Spulenwindungen 8 (rechte Figurenhälfte).

In einem im Ausführungsbeispiel unteren Leiterplattenbereich 12 sind eine Anzahl von Hall-Sensoren 13 nebeneinander bzw. in Linearrichtung 9 hintereinander und zueinander beabstandet angeordnet. Die Hall-Sensoren 13 bilden in Verbindung mit den Magneten 7 des bewegten Sekundärteils 3 ein magnetisches Positionserkennungs- oder Positionserfassungssystem.

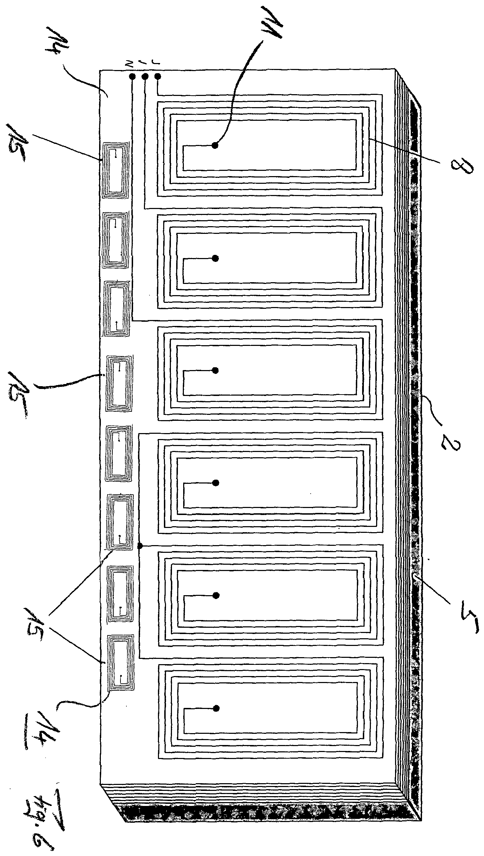

Fig. 6 zeigt das Primärteil 2 in einer Darstellung gemäß Fig. 5. In Abweichung hiervon ist auf die vordere Leiterplatte 4 eine Geberspur 14 in Form von mehreren, in Bewegungs- oder Linearrichtung 9 hintereinander angeordneten Geberwindungen 15, wiederum in Form von Leiterbahnen, aufgeprägt. Die bestromten Signal- oder Geberwindungen 15 erzeugen elektromagnetische Felder, beispielsweise nach Art inkrementeller Encoderspuren, die in nicht näher dargestellter Art und Weise mittels auf dem bewegten Sekundärteil 3 angeordneten Hall-Sensoren zur Positionserkennung erfasst werden.

Die von den Hall-Sensoren generierten Signale, beispielsweise mittels Schmitt-Trigger-Schaltungen digitalisierte Signale, können zur Ermittlung der jeweiligen Position des bewegten Sekundärteils 3 entlang der unbewegten Primärteile 2 ausgewertet werden.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

So können beispielsweise die Hall-Sensoren 13 oder die Geberspur 14 auch auf einer separaten Leiterplatte angeordnet sein. Auch können andere magnetfeldsensitive (magnetoresistive) Sensoren, beispielsweise GMR(Giant Magneto Resistance)-Sensoren, AMR(Anisotrope Magneto Resistive)-Sensoren oder CMR (Colossal Magneto Resistance)-Sensoren, oder ein optisches Positionserkennungssystem vorgesehen sein.

### Bezugszeichenliste

- 1: Linearmotor
- 2: Primärteil
- 3: Sekundärteil
- 4: Leiterplatte
- 5: Rückschluss
- 6: Träger
- 7: Permanentmagnet
- 8: Spulenwindung
- 9: Linear-/Bewegungsrichtung
- 10: Querrichtung
- 11: Durchkontaktierung
- 12: Leiterplattenbereich
- 13: Hall-Sensor
- 14: Geberspur
- 15: Geberwindung

## Patentansprüche

1. Linearmotor (1) mit einem eine Motorwicklung tragenden Stator in Form von zwei Primärteile (2), zwischen denen ein bewegtes Sekundärteil (3) unter Luftspaltbildung angeordnet ist,
- wobei jedes Primärteil (2) eine mehrlagige Leiterplatte (4) mit einer Mehrzahl von in Bewegungsrichtung (9) des Sekundärteils (3) nebeneinander und quer zur Bewegungsrichtung (9) hintereinander angeordneten sowie als Leiterbahnen ausgeführte Spulenwindungen (8) der Motorwicklung aufweist,
- wobei die Spulenwindungen (8) mittels Durchkontaktierung (11) mit Spulenwindungen (8) benachbarter Leiterplatten (4) elektrisch verbunden sind,
- wobei jede Leiterplatte (4) für jede Phase (u, v, w) einer dreiphasigen Motorwicklung eine Anzahl von in Bewegungsrichtung des Sekundärteils (3) nebeneinander angeordnete Spulenwindungen (8) trägt, und
- wobei das Sekundärteil (3) einen magnetisch nicht-leitenden Träger (6) aufweist, in welchen die Permanentmagnete (7) aufgenommen sind.

2. Linearmotor (1) nach Anspruch 1,
**dadurch gekennzeichnet**
**dass** das Primärteil (2) einen zur Erhöhung des elektromagnetischen Flusses vorgesehenen und geeigneten magnetischen Rückschluss (5) aufweist, auf dem die Leiterplatte (4) angeordnet und/oder befestigt ist.

3. Linearmotor (1) nach Anspruch 1 oder 2,
**dadurch gekennzeichnet,**
**dass** der Träger (6) aus Aluminium oder Kunststoff besteht.

4. Linearmotor (1) nach einem der Ansprüche 1 bis 3,
**dadurch gekennzeichnet,**
**dass** das Sekundärteil (3) mit Permanentmagneten (7), vorzugsweise mit einer Polpaarzahl p > 1, versehen ist.

5. Linearmotor (1) nach einem der Ansprüche 1 bis 4,
**gekennzeichnet durch**
ein magnetisches Positionserkennungssystem (7, 13).

6. Linearmotor (1) nach Anspruch 5,
**dadurch gekennzeichnet,**
**dass** das Positionserkennungssystem (7, 13) eine magnetische erfassbare Geberspur (7) und mindestens einen magnetischen Sensor (13) umfasst.

7. Linearmotor (1) nach Anspruch 5 oder 6,
**gekennzeichnet durch**
mindestens einen vom bewegten Sekundärteil (3) mitgeführten magnetischen Sensor und eine auf der Leiterplatte (4) vorgesehene Geberspur (14).

8. Linearmotor (1) nach Anspruch 7,
**gekennzeichnet dadurch, dass** die Geberspur (14) in Form von linear angeordneten und ein elektromagnetisches Feld erzeugenden Geberwindungen (15) auf die Leiterplatte (4) aufgeprägt ist.

9. Linearmotor (1) nach Anspruch 5 oder 6,
**gekennzeichnet durch**
mindestens einen auf der Leiterplatte (4) angeordneten magnetischen Sensor (13).

10. Linearmotor (1) nach Anspruch 9, **dadurch gekennzeichnet,**
**dass** der Sensor (13) ein Hall-Sensor-Array ist.

## Claims

1. Linear motor (1) comprising a stator, which is fitted with a motor winding, in the form of two primary parts (2) between which a moving secondary part (3) is arranged so as to form an air gap,
- wherein each primary part (2) has a multilayer printed circuit board (4) having a plurality of coil turns (8) of the motor winding which are arranged next to one another in the movement direction (9) of the secondary part (3) and one behind the other transverse to the movement direction (9) and also are embodied as conductor tracks,
- wherein the coil turns (8) are electrically connected to coil turns (8) of adjacent printed circuit boards (4) by means of through-plating (11),
- wherein each printed circuit board (4) is fitted with a number of coil turns (8), which are arranged next to one another in the movement direction of the secondary part (3), for each phase (u, v, w) of a three-phase motor winding, and
- wherein the secondary part (3) has a magnetically impermeable carrier (6) in which the permanent magnets (7) are accommodated.

2. Linear motor (1) according to Claim 1, **characterized in that** the primary part (2) has a magnetic return path (5) which is provided and suitable for increasing the electromagnetic flux and on which the printed circuit board (4) is arranged and/or mounted.

3. Linear motor (1) according to Claim 1 or 2, **characterized in that** the carrier (6) is composed of aluminium or plastic.

4. Linear motor (1) according to one of Claims 1 to 3, **characterized in that** the secondary part (3) is provided with permanent magnets (7), preferably with a number of pole pairs p > 1.

5. Linear motor (1) according to one of Claims 1 to 4, **characterized by** a magnetic position identification system (7, 13).

6. Linear motor (1) according to Claim 5, **characterized in that** the position identification system (7, 13) comprises a magnetic detectable encoder track (7) and at least one magnetic sensor (13).

7. Linear motor (1) according to Claim 5 or 6, **characterized by** at least one magnetic sensor, which is carried along by the moving secondary part (3), and a encoder track (14), which is provided on the printed circuit board (4).

8. Linear motor (1) according to Claim 7, **characterized in that** the encoder track (14) is impressed onto the printed circuit board (4) in the form of encoder turns (15) which are arranged in a linear manner and generate an electromagnetic field.

9. Linear motor (1) according to Claim 5 or 6, **characterized by** at least one magnetic sensor (13) which is arranged on the printed circuit board (4).

10. Linear motor (1) according to Claim 9, **characterized in that** the sensor (13) is a Hall sensor array.

## Revendications

1. Moteur linéaire (1) comportant un stator portant un enroulement de moteur sous la forme de deux parties primaires (2) entre lesquelles est disposée une partie secondaire (3) mobile en formant un entrefer,
- dans lequel chaque partie primaire (2) comporte une carte de circuit imprimé (4) multicouche pourvue d'une pluralité d'enroulements de bobine (8) de l'enroulement de moteur, qui sont disposés les uns derrière les autres dans la direction de déplacement (9) de la partie secondaire (3), les uns à côté des autres et transversalement à la direction du déplacement (9) et qui sont conçus sous forme de pistes conductrices,
- dans lequel les enroulements de bobine (8) sont reliés électriquement à des enroulements de bobine (8) de cartes de circuits imprimés (4) adjacentes au moyen d'une métallisation traversante (11),
- dans lequel chaque carte de circuit imprimé (4) porte, pour chaque phase (u, v, w) d'un enroulement de moteur triphasé, un certain nombre d'enroulements de bobine (8) disposés côte à côte dans la direction de déplacement de la partie secondaire (3), et
- dans lequel la partie secondaire (3) comporte un support (6) magnétiquement non conducteur dans lequel sont logés les aimants permanents (7).

2. Moteur linéaire (1) selon la revendication 1, **caractérisé en ce que** la partie primaire (2) présente un élément de retour magnétique (5) qui est prévu et adapté pour augmenter le flux électromagnétique, sur lequel est disposée et/ou fixée la carte de circuit imprimé (4).

3. Moteur linéaire (1) selon la revendication 1 ou 2, **caractérisé en ce que** le support (6) est en aluminium ou en matière plastique.

4. Moteur linéaire (1) selon l'une des revendications 1 à 3, **caractérisé en ce que** la partie secondaire (3) est munie d'aimants permanents (7), de préférence d'un nombre de paires de pôles p > 1.

5. Moteur linéaire (1) selon l'une des revendications 1 à 4, **caractérisé par** un système de détection de position magnétique (7, 13).

6. Moteur linéaire (1) selon la revendication 5, **caractérisé en ce que** le système de détection de position (7, 13) comprend une piste codeuse magnétique détectable (7) et au moins un capteur magnétique (13).

7. Moteur linéaire (1) selon la revendication 5 ou 6, **caractérisé par** au moins un capteur porté par la partie secondaire (3) déplacée et une piste codeuse (14) prévue sur la carte de circuit imprimé (4).

8. Moteur linéaire (1) selon la revendication 7, **caractérisé en ce que** la piste codeuse (14) est estampée sur la carte de circuit imprimé (4) sous la forme d'enroulements codeurs (15) disposés linéairement et générant un champ magnétique.

9. Moteur linéaire (1) selon la revendication 5 ou 6, **caractérisé par** au moins un capteur magnétique (13) disposé sur la carte de circuit imprimé (4).

10. Moteur linéaire (1) selon la revendication 9, **caractérisé en ce que** le capteur (13) est un réseau de capteurs Hall.
